(19) Europäisches Patentamt

European Patent Office

Office européen des brevets

(11) **EP 2 398 296 B1**

(12) **EUROPEAN PATENT SPECIFICATION**

(45) Date of publication and mention
of the grant of the patent:
**03.04.2013 Bulletin 2013/14**

(51) Int Cl.:
***H05B 6/10*** *(2006.01)*

(21) Application number: **10290333.3**

(22) Date of filing: **21.06.2010**

(54) **A fluid heating device and an engine comprising said device, in particular for a rocket**

Flüssigkeitserwärmungsvorrichtung und Motor mit dieser Vorrichtung, insbesondere für eine Rakete

Dispositif de chauffage de fluides et moteur comprenant ledit dispositif, en particulier pour une fusée

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**21.12.2011 Bulletin 2011/51**

(73) Proprietor: **Agence Spatiale Européenne**
**75738 Paris Cedex 15 (FR)**

(72) Inventors:
• **Dujarric, Christian Francois Michel**
**75005 Paris (FR)**

• **Santovincenzo, Andrea**
**2200 AG Noordwijk (NL)**

(74) Representative: **Priori, Enrico**
**Cabinet Orès**
**36, rue de St. Pétersbourg**
**75008 Paris (FR)**

(56) References cited:
**EP-A2- 0 630 094      US-A- 3 821 508
US-A- 3 899 885       US-A1- 2005 263 522**

## Description

The invention relates to a fluid heating device and an engine, in particular for a rocket.

Rocket propulsion is the only means that can be used beyond the atmosphere. The size of a space vessel depends on its mission and on a number of key engineering parameters, among which the specific impulse Isp of its propulsive engine, which drives the achievable performance through the conventional formula:

$$\Delta V = g_0.\text{Isp } \ln(m_1/m_0) \quad (I)$$

in which $\Delta V$ is the achieved speed increment, go is the attraction due to gravity, $m_1$ is the vehicle mass before engine ignition, $m_0$ is the vehicle mass after the propulsive phase and In is the natural logarithm.

Improvements in rocket propulsion are tending to increase this specific impulse, but progress has been very slow over recent decades and there are physical limits on this parameter.

The present invention is proposed to be applied to stages for propulsion in space that come into operation in orbit or starting from other planets, and which may contribute to various missions, such as, for example, a manned Earth-to-Mars mission. The levels of thrust required are then adapted to the mission in question.

In the present state of the art, there are only two solutions which enable a sufficient ratio to be obtained between the thrust and the mass of the engine to satisfy the needs for large interplanetary missions. These are chemical propulsion and nuclear thermal propulsion.

At present, and for all existing types of rocket, thrust is obtained by expanding a gas at high pressure, which gas is heated to a high temperature by a single source, whether chemical or nuclear. There are technical and physical limits on the heating of gas, thus giving rise to limits concerning specific impulse Isp.

Chemical propulsion is well known and is used by all launchers presently in operation. At present the highest-performance engines use staged combustion.

The present limits on specific impulse Isp performance of chemical propulsion are due to physical limitations, the most important of which is the choice of propellant. The best known is the combination of liquid hydrogen and liquid oxygen. Small improvements can be obtained by increasing the pressure in the combustion chamber, but at the cost of increased technological difficulties.

Nuclear thermal propulsion presents a specific impulse which is greater than that which can be produced by chemical propulsion. The heat generated by a nuclear reactor is transferred directly to an expelled gas which is supplied by tanks. In general, the gas is hydrogen because it has the lowest molecular mass.

Nuclear thermal propulsion was actively developed in the United States during the 1960s in the context of the NERVA program, and more recently in the context of the Timberwind program. Several tests were implemented on the ground and in particular, over a period of 1 hour, it delivered thrust of 30 tons with an impulse Isp of 800 seconds. In-depth studies were also performed in Russia and tests were made on subsystems.

Specifically, achieving impulse Isp significantly greater than that generated by present-day stages that burn liquid oxygen and liquid hydrogen implies that nuclear thermal propulsion must operate at the highest possible temperatures and at relatively high pressures at the interface between the nuclear core and the outlet gases. The required performance would push technology to its limits in a portion of the engine that is critical from the safety point of view.

Moreover, it is difficult to make the internal temperature of the nuclear core uniform. As a result, there is a risk of the engine being degraded because the temperature margins are small compared with the technological limits of the materials.

To overcome, at least in part, the limits stated above, it has been proposed to introduce additional heat in the supersonic region of the exhaust of a nuclear thermal propulsion device.

An inductive nuclear thermal engine based on this principle is described in the patents US 6,971,228 and FR 2 788 812.

The engine disclosed in these patents comprises an induction loop surrounding a zone of the gas ejection nozzle (supersonic region) to heat the ejected gases and a high frequency electricity generator for powering said induction loop.

The induction loop serves to create annular currents in the plasma ($H_2$ plasma) which heat the plasma by the Joule effect. Thus, the magnetic field is used directly to produce heat, the energy losses in the electrical circuit being reinjected into the propellant fluid.

The propulsion force is then obtained by the expansion of the gases heated in the nozzle, thereby converting heat energy into thrust.

The gas ejection nozzle is separated in three diverging regions, a first region upstream of a second region circumferentially surrounded by said inductive coil and a third region following downstream the second region.

The engine dimensioning optimisation efforts following the previous patent declaration revealed that according to the plasma stability theory, satisfactory induction heating of the $H_2$ plasma could be obtained at low to moderate pressure.

The induction loop has thus been positioned downstream enough in the gas ejection nozzle to obtain hydrogen at the appropriate pressure. Consequently, the gas ejection nozzle of this engine needs a first region which is large enough for obtaining a sufficient low pressure in the second region, which is surrounded by the inductive loop. A third region is then necessary downstream the second region to transform the added energy in the expanding gases into added thrust.

Thus, the total nozzle should be much larger than conventional nozzles.

Additional investigation also revealed that the exhaust gas thermal equilibrium requires a relaxation time which might not be totally reached when selecting a reasonable length for the third region of the nozzle; therefore only part of the added energy introduced by the inductive loop in the second region might contribute to the increase of thrust.

Moreover, the detailed design of the high frequency electricity generator and its coupling to the coil requires heavy equipment.

An aim of the invention is to solve at least one of the drawbacks of the known devices mentioned hereinabove.

Another aim of the invention is to avoid at least one of the drawbacks of the known devices while keeping a high specific impulse.

Another aim off the invention is to avoid at least one of the drawbacks of the known devices while decreasing the overall rocket engine mass.

To reach at least one of this aim, the invention proposes a fluid heating device having a longitudinal axis, characterized in that it comprises:

- at least two stages of turbine blades mounted on a support means, said stages of turbine blades being both capable of rotating freely around the longitudinal axis of the device and arranged so as to rotate in opposite directions ;
- at each stage of turbine blades, a plurality of means for generating a magnetic field which are integral with the corresponding stage of turbine blades, two consecutive means for generating said magnetic field at the same stage of turbine blades having opposite poles;
  the rotation of the stages of turbine blades allowing the generation of a variable magnetic field which direction changes with time from an upward direction to a downward direction and conversely, the upward and downward directions being both parallel to the longitudinal axis of the device, and
- at least one means for generating an electric current induced by the variation of this magnetic field, said electric current generating heat by Joule effect which is transferred to the fluid.

The fluid heating device may also have of the following technical features, alone or in combination:

- at each stage of turbine blades, each means for generating a magnetic field is disposed at the periphery of said stage;
- each means for generating a magnetic field is disposed between two consecutive blades of the same stage of turbine blades;

- for each stage of turbine blades, said plurality of means for generating a magnetic field are primary coils associated to a means for generating a continuous current;
- the winding directions and current feed of two consecutive primary coils around the periphery of a stage of turbine blades form opposite poles;
- said primary coils have a central axis disposed radially with respect to the stage of turbine blades to which it is integral with;
- heat transfer between said at least one means for generating an electric current induced by the variation of the magnetic field and the fluid is convective;
- it comprises a peripheral structure having a plurality of channels extending along the longitudinal axis of the device, each channel comprising at least one means for generating an electric current induced by a variation of the magnetic field, said electric current generating heat by Joule effect which is transferred to the fluid;
- each channel comprises a plurality of means for generating an electric current induced by a variation of the magnetic field, said means being secondary coils which succeed along the axis of the device;
- secondary coils have a central axis parallel to the axis of the device and are disposed, along the channel, at the level of a median plane between the consecutives planes formed by two consecutive stages of turbine blades;
- secondary coils have a central axis perpendicular to the axis of the device and are disposed, along the channel, at the level of a plane formed by a stage of turbine blades;
- said secondary coils are placed on the internal surface of the channel;
- said at least one means for generating an electric current induced by the variation of the magnetic field so as to generate heat by Joule effect which is transferred to the fluid is a coating conducting electricity, disposed at the internal surface of the channel;
- said support means is a central hollow duct extending along the longitudinal axis of the device.

To reach at least one of this aim, the invention also proposes engine, in particular for a rocket, comprising a heating chamber for at least one propellant fluid and a gas ejection nozzle disposed downstream the heating chamber, characterized in that the heating chamber comprises a nuclear core and, downstream to said nuclear core, a fluid heating device according to one of the preceding claims for increasing the temperature of the fluid obtained at the outlet of the nuclear core.

The engine may also have of the following technical features, alone or in combination:

- a heat exchanger for heating the propellant fluid before this latter enters the nuclear core;

- a closed circuit wherein a working fluid flows, such as helium, said closed circuit comprising:

  o at least one compressor for pressurizing the working fluid;
  o the fluid heating device according to the invention for expanding said working fluid by means of the stages of turbine blades;
  o at least one turbine connected to the driving compressor by means of a shaft for further expanding the working fluid; and
  o at least one heat exchanger for cooling down the working fluid.

An important "dry" mass saving results from the design proposed by the invention. Indeed, contrary to the above-mentioned patents, no alternator, no turbine-alternator mechanical power shaft, no power lines, no impedance adapters, or no inductive coils around the nozzle are needed. The turbine stack is also simplified as it comprises no stator stage and no mechanical power shaft internal to the turbine.

All these means have been replaced by a much more integrated induction means.

An improvement in the reliability of the device also results from this simplification.

As the design proposed by the invention is much more integrated, it provides less energy loss and consequently, increased overall engine efficiency.

In addition, the heating of the propellant fluid, such as hydrogen, is no longer made by induction heating in the supersonic region of the propulsion device, but by convection heating in a subsonic region. It avoids any problem of stability versus pressure of the hydrogen plasma.

It should also be noted that the convection heat transfer takes place in the subsonic flow region of the engine where the residence time of hydrogen is much higher than its resident time in the supersonic flow region (gas ejection nozzle), therefore allowing the nozzle to operate in thermal equilibrium condition. The nozzle optimal dimensions are back to conventional nozzles size.

The invention shall be better understood, and other aims, advantages and features will appear by reading the following description, written in regard of the accompanying drawings, on which:

- figure 1 is a schematic view of the engine according to the invention;
- figure 2 is a perspective view, partially cut, of a fluid heating device according to the invention, called turbo-inductor, which is a subassembly of the propulsion device according to the invention, said turbo-inductor being installed downstream the nuclear core of the engine of figure 1, on which the fluid flows are shown;
- figure 3 is a perspective view, partially cut, of the turbo-inductor of the propulsion device of figure 2, on which the movements of the different turbine stages of the turbo-inductor are shown;
- figure 4 is a perspective view, partially cut, of the turbo-inductor of the propulsion device of figure 2, on which induction means are shown ;
- figure 5 is a close-up view of the possible design implementation of one part of the turbo-inductor of the propulsion device illustrated on figure 2;
- figure 6 is another partial view of the part of the propulsion device shown on figure 2, according to another possible embodiment;
- figure 7 is a top view of the part of the propulsion device illustrated on figure 6;
- figure 8 is a schematic view of a variant of the engine illustrated on figure 1.

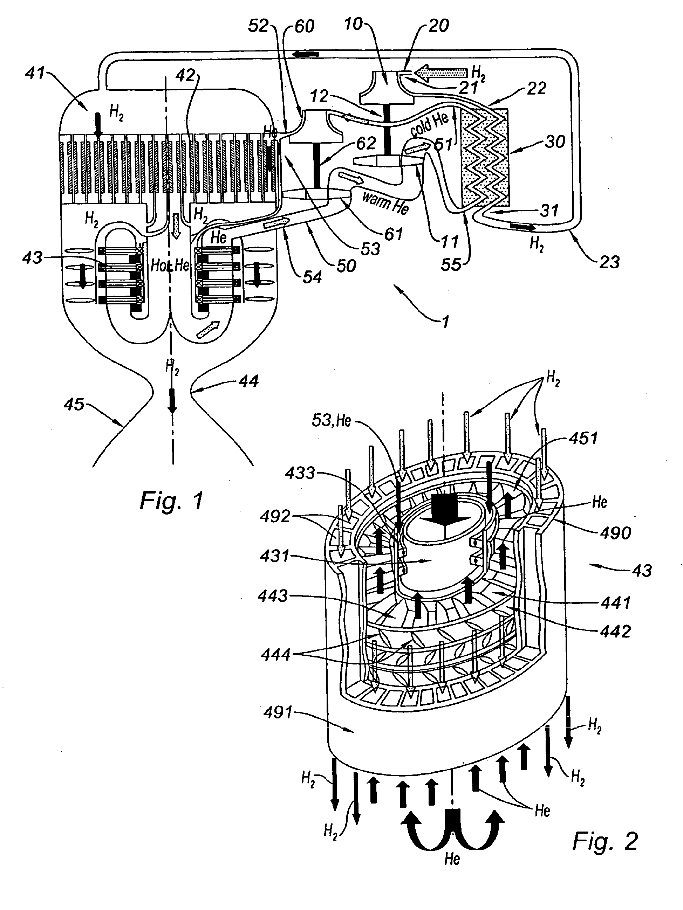

A first embodiment of the propulsion device 1 is illustrated on figure 1.

The engine 1 comprises a propellant fluid circuit 20, which comprises a duct 21 for feeding the propellant fluid to a first compressor 10, which increases the pressure of the propellant fluid.

The propellant fluid is generally liquid Hydrogen (LH$_2$) as it presents a low molecular mass and adequate cooling properties for the invention. The description which follows is thus based on LH$_2$ as propellant fluid, even though other liquefied propellants may be used.

Hydrogen is provided by tanks (not shown) comprising liquid hydrogen stored at cryogenic temperature.

The first compressor 10 feeds a duct 22 connected to a heat exchanger 30, in which the pressurized liquid hydrogen is warmed.

A first outlet 31 of the heat exchanger 30 is connected to a duct 23 which drives hydrogen of the engine 1.

The engine 1 comprises a heating chamber 41 having a nuclear core 42. The nuclear core 42 is composed of a fissile material body assembly, traversing fluid pipes and control rods assembly similar in design to the state of the art nuclear thermal engines. The traversing fluid pipes are grouped to form two independent fluid circuits, namely one circuit for the flow of hydrogen and the other for the flow of a working fluid circulating in a closed circuit which will be described hereinafter.

Recent advances have been made towards a better utilisation of the nuclear core of a nuclear thermal rocket engine, such as the bimodal engine concept; all of them in principle can be combined with or adapted to the present invention. For example, we can cite "Bimodal Nuclear Thermal Rocket Propulsion Systems for Human Exploration of Mars", Marc N. Wilson, Dr. Alan Wilhite and D.R. Komar, AIAA 2009-5311 presented at the Joint Propulsion Conference and Exhibit in Denver, Co 2-5 August 2009

The design of the nuclear core is well-known from one skilled in the art and will not be further described.

The chamber 41 also comprises a device 43, called turbo-inductor. The turbo-inductor 43 is disposed downstream the nuclear core 42 which respect to the flow of hydrogen. The design of the turbo-inductor 43 will be further described hereinafter, in particular in view of figures 2 to 7.

Thus, hydrogen coming from the duct 23 enters the chamber 41, passes through the nuclear core 42 then, through a plurality of channels 492 at the periphery of the turbo-inductor 43.

By passing trough the nuclear core 42, hydrogen is warmed to a high temperature. Its temperature further increases in the turbo-inductor 43.

Finally, hydrogen undergoes three steps of warming, namely in the heat exchanger 30, in the nuclear core 42 and finally in the turbo-inductor 43.

The flow of hydrogen in the chamber 41 is subsonic.

Hydrogen finally passes through the throat 44 and the ejection nozzle 45 (supersonic region) of the engine 1, where hydrogen expands to create the thrust.

The means 42, 43 for heating hydrogen are inserted in the heating chamber 41.

The design of the nozzle 45 is conventional.

The engine 1 also comprises a closed circuit 50 with helium (He) as working fluid. Another working fluid may be implemented.

Helium passes through the heat exchanger 30, the nuclear core 42 and the turbo-inductor 43.

The heat exchanger 30 serves as a cold source for helium. The nuclear core 42 serves as a hot source for helium.

The heat exchanger 30 is a counter-current heat exchanger, as shown in figure 1.

The Helium circuit 50 comprises a duct 51 for feeding cold helium to a second compressor 60 (helium compressor). The second compressor 60 feeds a duct 52 which separates into two parts, a first part feeding the nuclear core 42 and the second part 53 feeding the turbo-inductor 43 for cooling down mechanical elements of the turbo-inductor 43. The main quantity of helium is directed to the nuclear core 42.

Helium is warmed in the nuclear core 42 and passes through the central part of the turbo-inductor 43, then backwards at the periphery of the turbo-inductor 43 through a stack of turbines blades of said turbo-inductor.

At the outlet of the turbo-inductor 43, helium is directed to a duct 54 which drives it to a second turbine 61. The second turbine 61 is mounted on a second shaft 62 connected to the second compressor 60.

The second turbine 61 may freely rotate on its bearings. Consequently, the flow of helium causes the second turbine 61 to rotate so that the second turbine 61 drives the second compressor 60 through the shaft 62.

The duct 54 further drives helium to a first turbine 11, which is mounted on a first shaft 12 connected to the first compressor 10.

The first turbine 11 may freely rotate on its bearings. Consequently, the flow of helium causes the first turbine 11 to rotate so that the first turbine 11 drives the first compressor 10 through the shaft 12.

The duct 54 finally feeds the heat exchanger 30 at its outlet 55, helium being cooled in the heat exchanger 30.

The design of the closed helium circuit 50 constitutes a Brayton cycle.

More precisely, the pressure and temperature of helium is firstly increased in the second compressor 60. Then, its temperature is highly increased the nuclear core 42 at a quasi-constant pressure. Then, the temperature decreases together with its pressure in the turbo-inductor 43 and in the turbines stages 11, 61. Finally, its temperature decreases at nearly constant pressure in the heat exchanger 30.

Two turbine stages 11, 61 are illustrated on figure 1. However, it should be noted that more than two turbine stages may be implemented in the engine 1. Moreover, the arrangement of the turbine stages 11, 61 may be reversed, the function of these turbines 11, 61 being to produce mechanical power by expanding helium.

As mentioned hereinabove, helium is also used to cool down mechanical elements of the turbo-inductor 43.

A function of the Brayton cycle is to generate the power which will be ultimately used to further increase the propellant temperature after passing through the nuclear core 42. As a side effect, the Brayton cycle warms up the hydrogen in the heat exchanger before this latter is injected into the nuclear core 42 of the chamber 41.

The turbo-inductor 43, which is in the subsonic region of the engine 1, is described hereinafter with figures 2 to 7.

The turbo-inductor 43 combines the functions formerly fulfilled in the patents US 6,971,228 and FR 2 788 812 by the turbine, mechanical power transmission, alternator, electric power transmission, and inductive heating into one subassembly using a convection heater. This combination of functions is enabling the mass and energetic savings.

It may be separated in two parts, a primary part and a secondary part.

The primary part of the turbo-inductor 43 comprises a central support means 431 which has the form of a hollow duct, for example a tube, which longitudinal axis corresponds to the longitudinal axis of the heating chamber 41. This central duct 431 serves as a mechanical support for a plurality of turbine blades arranged in several turbine stages 441, 442 stacked along its the longitudinal axis..

Each turbine stage may have the form of a disk.

Each turbine stage 441, 442 comprises a plurality of turbine blades and rotates freely around the central duct 431, for example thanks to bearings 433. The central duct 431 does not rotate and is, more precisely, fixed to the frame of the engine 1. Thus, each turbine stage rotates independently of the other turbine stages. No common shaft rotates with said turbine stages, and no inter-stages mechanical coupling is foreseen, each turbine blades stage being rotated on its own by the flow of Helium.

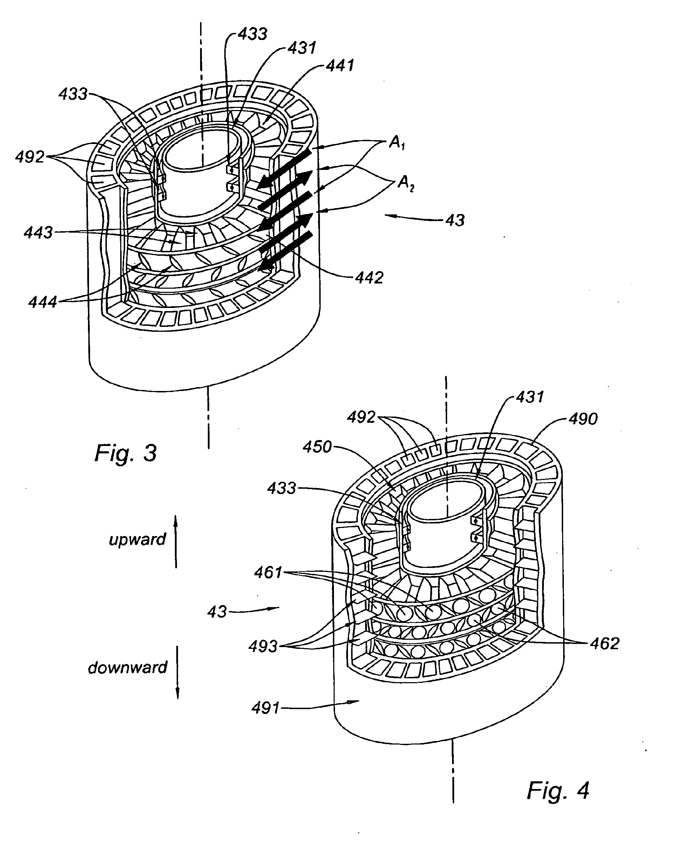

The blades 443, 444 are disposed to obtain opposite direction of rotation between two consecutive turbine stages 441, 442. In that aim, one person skilled in the art knows that it is sufficient to change the orientation of the turbine blades between two consecutive stages with respect to the direction of the flow of helium, as illustrated for example on figure 3, in order to compensate the swirl effect created by one turbine stage by the opposite swirl effect created by the next one. For example, the directions of rotation of two consecutive stages of turbine blades are illustrated by the arrows $A_1$ and $A_2$ in figure 3.

As the blades of two consecutive turbine stages 441, 442 rotate in opposite directions, no stator stages are needed between two consecutive turbine stages. It saves nearly half of the total blade mass and increases the turbine efficiency.

Indeed, in conventional turbines, the rotating turbines stages are mounted on a common shaft, so that said turbine stages rotate in the same direction. For keeping efficiency, it is necessary to install between the two rotating stages a redresser stage called stator which at least nullifies the swirl effect generated by the upstream turbine stage, and preferably inverts the swirl effect. If no stator was placed between two consecutive turbine stages, the efficiency of the downstream turbine stage would be very low, because the angle of attack of the flow would be close to zero due to the swirl. Furthermore, this stator has its own aerodynamic drag which creates a useless loss of energy in the form of a loss of pressure without mechanical energy recovered.

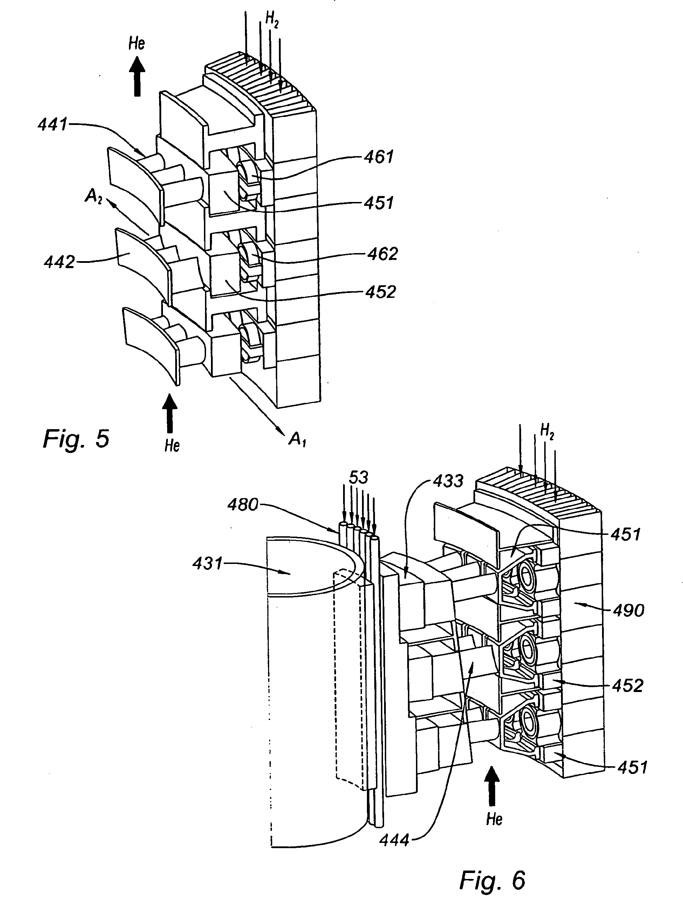

The tips of each blade of the same stage 443, 444 are fixed to the internal part of a respective ring 451, 452. Consequently, each ring 451, 452 rotates in the same direction as the stage of turbine blades, as illustrated on figure 5 by arrows $A_1$ and $A_2$.

The external part of each ring 451, 452 supports a plurality of primary coils 461, 462 such that said coils rotate in the same direction of the stage 441, 442 of turbine blades to which they are integral with.

The primary coils 461, 462 are preferably identical. However, they may also differ one from the other, without departing from the scope of the invention.

The primary coils 461 of the ring 451 are radially disposed beyond the tips of the turbine blades.

Preferably, the primary coils 461 of the ring 451 are also peripherally disposed between two successive blades of the same stage of turbine blades. However, without departing from the scope of the invention, the peripheral position of the primary coils 461 may be independent of the position of the turbine blades, and the number of primary coils 461 may be independent of the number of turbine blades.

Similar remarks may be made for the primary coils 462 of the ring 452, this latter rotating in the opposite direction of the ring 451.

Moreover, the central axis each of these coils 461, 462 is oriented in the radial direction with respect to the corresponding stage of turbine stage. The arrangement of the primary coils 461, 462 is illustrated on figure 4, without their supporting rings 451, 452 and on figure 5 together with their supporting rings.

The primary coils 461, 462 are fed with a continuous electric current produced by well-known solutions such as brushes 470 or any equivalent solution derived from conventional alternators. The primary coils are thus coreless electromagnets.

In the frame of the invention, it means that the electric current passes through the blades, the rings 451, 452 to finally attain the primary coils 461,462.

In that case, the bearings 433 and the electrical means chosen to feed continuous current to the turbine stages are the elements of the turbo-inductor 43 which are cooled down by said second part 53 of helium collected at the outlet of the duct 52 connecting the second compressor 60 and the nuclear core 42.

In that aim, said part of helium is conducted into a cooling means 480 formed by a series of parallels tubes disposed between the central duct 431 of the turbo-inductor 43 and said mechanical elements. Each of these tubes 480 extends along the central duct 431, in the direction of the longitudinal axis of said central duct 431. Helium flowing through these tubes is discharged on the elements to be cooled and flows through turbine interstages leaks, at the root of the turbine blades back to the main Helium flow.

Alternatively, without departing from the scope of the invention, some of the helium cooling flow may be conducted through cooling tubes in the turbine blades where some pressure is recovered through centrifugal effect, and may be discharged on the primary coils for further cooling and may be ultimately discharged to the main helium flow through interstage leaks at the tip of the turbine blades.

Alternatively, without departing from the scope of the invention the cooling helium may be conducted towards any other engine element which may need cooling and be ultimately dumped into the main Helium flow.

Moreover, considering one stage 441 of turbine blades and the associated primary coils 461 to this stage, the winding direction of two consecutive primary coils disposed at the same stage 441 of turbine blades is alterned. Consequently, the continuous current feeding the primary coils 461 circulate in opposite directions from one primary coil to the next primary coil disposed at the same stage 441 of turbine blades. It allows alternating the consecutive magnetic poles implemented on a same turbine stage. It can be understood by one skilled in the art that the alternation of two consecutive magnetic poles implemented on a same turbine stage may be obtained otherwise, for example by changing the entry of current from one coil to the other.

In other words, when the turbo-inductor 43 operates, the stage 441 of turbine blades rotates so that the external face of one coil operates as a north pole and the corresponding external face of the next coil operates as a south pole and so on along the periphery of that stage.

Considering the description hereinabove, the primary coils 461, 462 have a similar function to the poles of a synchronous machine, such as an alternator.

In addition, each winding of a primary coil may be made of a high melting temperature material, such as tungsten. As the center of the primary coil is submitted to a fairly high temperature, above the Curie point of any known ferromagnetic material, this core only contains Helium gas.

We now describe the secondary part of the turbo-inductor 43.

The secondary part of the turbo-inductor 43 comprises a peripheral structure 490, which external side 491 is rigidly mounted to the frame of the chamber 41 and which internal side faces the primary coils 461, 462.

The structure 490 is a hollow structure comprising a plurality of channels 492 extending along the axis of the chamber 41 and in which Hydrogen coming from the nuclear core 42 flows, as shown in figure 2.

Each channel 492 comprises a plurality of secondary coils 493 along the longitudinal axis of said channel, as shown on figure 4. More precisely, the secondary coils 493 are disposed regularly along the axis, at the level of a median plane between the consecutives planes formed by two consecutive stages 441, 442 of turbine blades.

It means that the secondary coils 492 are disposed, along the longitudinal axis of the chamber 41, between two primary coils, these two primary coils belonging to two consecutive stages of turbine blades.

When a flow of helium outputs the nuclear core 42, it brings about the rotation of the successive stages of turbine blades in opposite directions from one stage to the next stage.

As the primary coils 461, 462 are mounted together with these stages of turbine blades, they rotate in the same way so that each of these primary coils generates a magnetic field.

As the stage 441 of turbine blades rotates, any secondary coil 493 placed between stage 441 and 442 sees the poles north (N) or south (S) of the turbine blade stage 441 just above it, passing from north to south to north (N-S-N). In the same time, this secondary coil 493 sees the poles north (N) or south (S) of the stages 442 of turbine blades just below it, passing from south to north to south (S-N-S). These poles are those of the external faces of said primary coils, as the secondary coils 493 are disposed outside the primary coils, considering the radius of the device.

In that way, any secondary coil 493 sees a magnetic field which direction changes with time from an upward direction to a downward direction and conversely. The upward and downward directions, both parallel to the axis of a channel 492 (and thus to the axis of the chamber 41), are illustrated on figure 4.

The variation of the magnetic field creates a response in the secondary coils 493, which generates a current in the secondary coils 493.

In order to obtain a good induction in said secondary coils 493, the central axis of the secondary coils comprised in one channel corresponds to the longitudinal axis of said channel 492. For example, a secondary coil 493, electrically closed on itself, may have the shape of the channel.

Then, the current inducted in the secondary coils 493 creates a Joule effect in said coils.

The heat generated by the Joule effect in the secondary coils is transferred by convection to the flow of hydrogen in the channels 492.

In that way, hydrogen is overheated by the turbo-inductor 43.

Given the high temperatures to which the secondary coils 493 are subjected, they may be made of Tungsten.

It can be understood that the turbo-inductor 43 intervenes, by means of the turbine blades, in the expansion of Helium within the Brayton cycle.

In a variant, the secondary coils 493 described hereabove are, in each channel 492, either supplemented or replaced by secondary coils having an axis placed radially in front of each primary coil, namely perpendicular to the axis of the turbo-inductor 43. These coils are preferably placed on the internal face of the channels 492 in a plane which is parallel to the hydrogen flow. These coils use the variation of the radial component of the magnetic field to create an electric current, as a conventional alternator would, and convert the energy of this current into heat. Nevertheless, such a configuration is less favourable for the heat transfer to the hydrogen than the first variant described above, as only one side of the channels 492 is heated.

In another variant, the secondary coils 493 described hereabove are suppressed. To replace them, each channel 492 may be coated by a coating (not shown) that conducts electricity, for example made of Tungsten, on its internal surface.

In that case, the magnetic field generated by the primary coils creates an electric current directly in the coating, which is heated by Joule effect. The heat generated by the Joule effect is transferred to the flow of Hydrogen.

The function of the coating is the same as the function of the secondary coils 493 described hereabove. Consequently, the coating may be likened to a coil. The coating takes advantage both of the axial and of the longitudinal variations of the magnetic flux to create current, and therefore it acts as a combination of coil orientations similar to the possible combination with previous variants.

This variant may be valuable for increasing the heat transfer (total amount of energy transferred) between the flow of hydrogen and the channels. In particular, one can be understood from one skilled in the art that the exchange surface of the coating should be higher than the total exchange surface provided by the plurality of secondary coils.

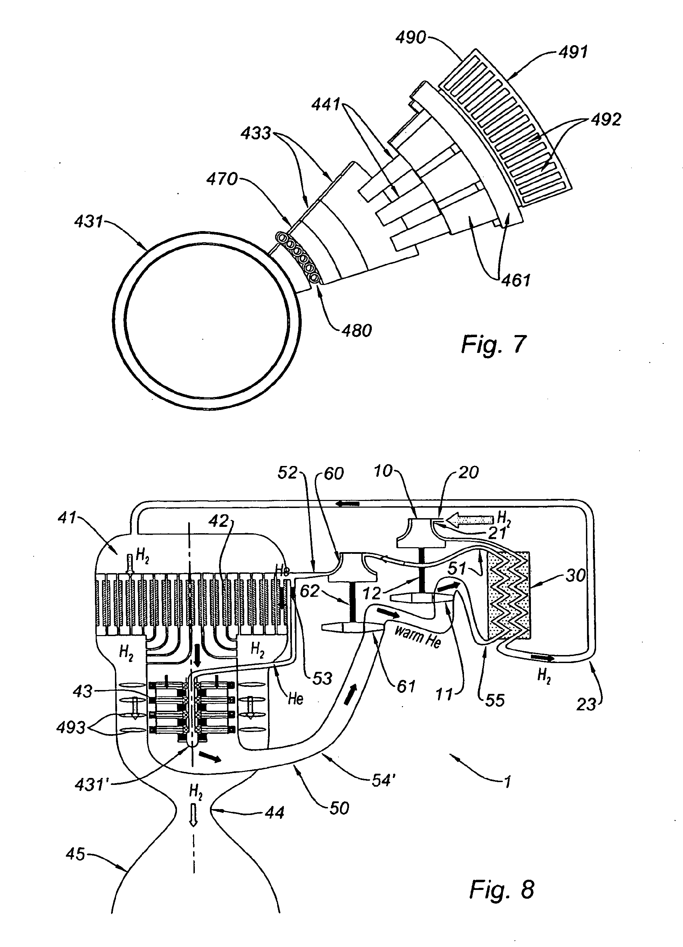

Another possible implementation of the turbo-inductor 43 is illustrated on figures 6 and 7, which should be compared to the implementation illustrated on figure 5. On figures 6 and 7, the rings 451, 452 are formed by two arms maintaining the primary coils 461, 462 of a same stage of turbine blades by the periphery of said primary coils. It should be noted that all the other features of the engine 1, and more specifically of the turbo-inductor, described above are applicable to this implementation.

In a variant illustrated on figure 8, the structure of the turbo-inductor 43 is modified to change the course of helium.

Indeed, this variant does not comprise the central hollow duct 431 mentioned in figures 1 to 7 as support means, but a more compact central hollow piece 431'. This piece 431' is a cylinder of smaller diameter than the piece 431 which serves as mechanical support for the bearings 433 and which distributes the cooling helium fed from the duct 53 to the elements which need to be cooled in the turbo-inductor, thereby fulfilling the same function as the ducts 480 shown on figure 7.

This variant has the advantage to obtain a more compact turbo-inductor 43. Moreover, as this variant implies a smaller diameter for the bearings, it should imply a smaller bearing wear, thereby increasing the reliability of the turbo-inductor 43.

In this variant, Helium coming from the nuclear core 42 is directly injected into the turbine blades stages and finally exits the chamber 41 laterally through a duct 54' which is connected to the turbine 61 as in the previous variant.

All the other features of the engine 1 described above with reference to figures 2 to 7 may be implemented in the variant illustrated on figure 8.

For all the embodiments described above, one of the advantages of the engine according to the invention is that it allows reducing the "dry" mass of the propulsion system with respect to the engines discussed in the references US 6,971,228 or FR 2 788 812.

Moreover, as the design proposed by the turbo-inductor 43 suppresses the mechanical power transmission by shaft and the electric power transmission by lines as compared to the design of the devices disclosed in theses documents, it provides less energy loss. Most importantly, the thermal non-equilibrium effects potentially present in the exhaust plasma described in the former patent are no longer present in the proposed design. Globally, the overall engine efficiency is improved.

The reliability is also improved as many elements of the devices disclosed in these references are suppressed, suppressing de facto the risk of failure of that element.

In particular, it should be noted that the partial or total electric failure in one stage of turbine blades does not necessarily brings about the failure of the engine, as the other stages of turbine blades may still work normally. To the contrary, the failure of the induction loop and/or of the electric generator used in these prior art references would trigger the total loss of the hydrogen overheat.

In addition, the design of the invention gets around the difficulties encountered in these prior art references operating, in the supersonic region, by a heat transfer generated by the Foucault's currents induced in the hydrogen plasma by the induction loop.

Indeed, in the frame of the invention, primary coils generate Foucault's currents in an intermediate conductive element which transfers heat by convection to hydrogen. In these conditions, the turbo-inductor may be placed in the subsonic region of the engine so that the gas ejection nozzle has a classical design which is much lighter than the dual bell nozzle described in the previous patents.

The turbo-inductor 43 and/or the engine 1 according to the invention finally make a significant step towards the prior art propulsion devices for providing a high thrust, high specific impulse device with reduced technical risks.

One skilled in the art will understand that the turbo-inductor 43 is a device that may be used in other applications than space propulsion.

Indeed, the turbo-inductor 43 is a means for heating a fluid.

Thus, it may be used in many fields of application.

In particular, it may be used in applications where the temperature conditions are lower than in a rocket, such that materials having a Curie temperature higher than the operating temperature may be used. In that case, it should be noted that the primary coils 461, 462 may comprise a ferromagnetic core or may be made of a permanent magnet.

Finally, the turbo-inductor 43 forms a device which comprises means 441, 442, 461, 462, 470 for generating a variable magnetic field and means 493 generating an electric current induced by the variation of this magnetic field.

An aspect of the invention is that stages 441, 442 of turbine blades, capable of rotating in alternated directions around the longitudinal axis of the turbo-inductor 43, are used in combination with electromagnets 461, 462, or, if possible permanent magnets, for generating a variable magnetic field.

In particular, the variation of the magnetic field is made possible thanks to the rotation of the stages of turbine blades around the axis of the device and by the fact that two consecutive electromagnets (or permanent magnets for some applications) disposed at the same stage of turbine blades have opposite poles.

In particular, this fluid heating device may use high pressure primary fluid, either gas or liquid, to drive the turbine stages. For example, the energy of a water dam may be used.

In particular, this fluid heating device may be used to heat a secondary fluid, either gas or liquid or plasma, at a temperature which is much higher than the temperature of the primary fluid, even though the primary fluid constitutes the source of energy.

**Claims**

1. A fluid heating device (43) having a longitudinal axis, **characterized in that** it comprises:

    - at least two stages (441, 442) of turbine blades mounted on a support means (431, 431'), said stages of turbine blades being both capable of rotating freely around the longitudinal axis of the device and arranged so as to rotate in opposite directions ;
    - at each stage (441, 442) of turbine blades, a plurality of means (461, 462, 470) for generating a magnetic field which are integral with the corresponding stage of turbine blades, two consecutive means (461) for generating said magnetic field at the same stage of turbine blades (441) having opposite poles;

    the rotation of the stages (441, 442) of turbine blades allowing the generation of a variable magnetic field which direction changes with time from an upward direction to a downward direction and conversely, the upward and downward directions being both parallel to the longitudinal axis of the device, and

    - at least one means (493) for generating an electric current induced by the variation of this magnetic field, said electric current generating heat by Joule effect which is transferred to the fluid.

2. A fluid heating device according to one of the preceding claims, wherein, at each stage (441, 442) of turbine blades, each means (461, 462) for generating a magnetic field is disposed at the periphery of said stage (443).

3. A fluid heating device according to the preceding claim, wherein each means (461, 462) for generating a magnetic field is disposed between two consecutive blades of the same stage of turbine blades.

4. A fluid heating device according to the preceding claim, wherein, for each stage (441, 442) of turbine blades, said plurality of means (461, 462) for generating a magnetic field are primary coils associated to a means (470) for generating a continuous current.

5. A fluid heating device according to the preceding claim, wherein the winding directions and current feed of two consecutive primary coils (461) around the periphery of a stage (441) of turbine blades form opposite poles.

6. A fluid heating device according to claim 4 or 5, wherein said primary coils (461, 462) have a central axis disposed radially with respect to the stage (441, 442) of turbine blades to which it is integral with.

7. A fluid heating device according to one of the preceding claims, wherein heat transfer between said at least one means (493) for generating an electric current induced by the variation of the magnetic field and the fluid is convective.

8. A fluid heating device according to one of the preceding claims, comprising a peripheral structure (490) having a plurality of channels (492) extending along the longitudinal axis of the device, each channel (492) comprising at least one means (493) for generating an electric current induced by a variation of the magnetic field, said electric current generating heat by Joule effect which is transferred to the fluid.

9. A fluid heating device according to the preceding claim, wherein each channel comprises a plurality of means (493) for generating an electric current induced by a variation of the magnetic field, said means being secondary coils which succeed along the axis of the device.

10. A fluid heating device according to the preceding claim, wherein secondary coils (493) have a central axis parallel to the axis of the device and are disposed, along the channel, at the level of a median plane between the consecutives planes formed by two consecutive stages (441, 442) of turbine blades.

11. A fluid heating device according to claim 8 or 9, wherein secondary coils (493) have a central axis perpendicular to the axis of the device and are disposed, along the channel, at the level of a plane formed by a stage (441, 442) of turbine blades.

12. A fluid heating device according to the preceding claim, wherein said secondary coils are placed on the internal surface of the channel.

13. A fluid heating device according to claim 7, wherein said at least one means for generating an electric current induced by the variation of the magnetic field so as to generate heat by Joule effect which is transferred to the fluid is a coating conducting electricity, disposed at the internal surface of the channel (492).

14. A fluid heating device according to one of the preceding claims, wherein said support means (431) is a central hollow duct extending along the longitudinal axis of the device.

15. An engine (1), in particular for a rocket, comprising a heating chamber (41) for at least one propellant fluid and a gas ejection nozzle (45) disposed downstream the heating chamber (41), **characterized in that** the heating chamber (41) comprises a nuclear core (42) and, downstream to said nuclear core (42), a fluid heating device (43) according to one of the preceding claims for increasing the temperature of the fluid obtained at the outlet of the nuclear core (42).

16. An engine according to the preceding claim, comprising a heat exchanger (30) for heating the propellant fluid before this latter enters the nuclear core (42).

17. An engine according to one of the claims 15 or 16, comprising a closed circuit (50) wherein a working fluid flows, such as helium, said closed circuit (50) comprising:

- at least one compressor (60) for pressurizing the working fluid;
- the fluid heating device (43) of claims 1 to 14 for expanding said working fluid by means of the stages (441, 442) of turbine blades;
- at least one turbine (61) connected to the driving compressor (60) by means of a shaft (62) for further expanding the working fluid; and
- at least one heat exchanger (30) for cooling down the working fluid.

**Patentansprüche**

1. Fluiderwärmungsvorrichtung (43), welche eine Längachse aufweist, **dadurch gekennzeichnet, dass** sie umfasst:

- zumindest zwei Stufen (441, 442) von Turbinenschaufeln, welche an einem Tragmittel (431, 431') angebracht sind, wobei die Stufen von Turbinenschaufeln beide in der Lage sind, frei um die Längsachse der Vorrichtung zu rotieren, und so angeordnet sind, dass sie in entgegengesetzte Richtungen rotieren;
- an jeder Stufe (441, 442) von Turbinenschaufeln eine Vielzahl an Mitteln (461, 462, 470) zum Erzeugen eines Magnetfelds, welche einstückig mit der entsprechenden Stufe von Turbinenschaufeln verbunden sind, wobei zwei aufeinanderfolgende Mittel (461) zum Erzeugen des Magnetfelds an derselben Stufen von Turbinenschaufeln (441) entgegengesetzte Pole aufweisen;

wobei die Rotation der Stufen (441, 442) von Turbinenschaufeln die Erzeugung eines veränderlichen Magnetfelds, welches mit der Zeit die Richtung von einer Aufwärtsrichtung zu einer Abwärtsrichtung und umgekehrt wechselt, gestattet, wobei beide, die Aufwärtsrichtung und die Abwärtsrichtung, parallel zu der Längsachse der Vorrichtung sind, und

- zumindest ein Mittel (493) zum Erzeugen eines durch die Änderung dieses Magnetfelds induzierten elektrischen Stroms, wobei der elektrische Strom durch den Joule-Effekt Wärme erzeugt, welche auf das Fluid übertragen wird.

2. Fluiderwärmungsvorrichtung nach einem der vorangegangen Ansprüche, wobei an jeder Stufe (441, 442) von Turbinenschaufeln jedes Mittel (461, 462) zum Erzeugen eines Magnetfelds an der Peripherie der Stufe (443) angeordnet ist.

3. Fluiderwärmungsvorrichtung nach dem vorangegangen Anspruch, wobei jedes Mittel (461, 462) zum Erzeugen eines Magnetfelds zwischen zwei aufeinanderfolgenden Schaufeln derselben Stufe von Turbinenschaufeln angeordnet ist.

4. Fluiderwärmungsvorrichtung nach dem vorangegangen Anspruch, wobei für jede Stufe (441, 442) von Turbinenschaufeln gilt, dass die Vielzahl an Mitteln (461, 462) zum Erzeugen eines Magnetfelds Primärspulen sind, welche einem Mittel (470) zum Erzeugen eines ununterbrochenen Stroms zugeordnet sind.

5. Fluiderwärmungsvorrichtung nach dem vorangegangen Anspruch, wobei die Windungsrichtungen und die Stromspeisung von zwei aufeinanderfolgenden Primärspulen (461) um die Peripherie einer Stufe (441) von Turbinenschaufeln herum entgegengesetzte Pole bilden.

6. Fluiderwärumgsvorrichtung nach Anspruch 4 oder 5, wobei die Primärspulen (461, 462) eine Mittelachse aufweisen, welche bezogen auf die mit ihr einstückig verbundene Stufe (441, 442) von Turbinenschaufeln radial angeordnet ist.

7. Fluiderwärmungsvorrichtung nach einem der vorangegangenen Ansprüche, wobei ein Wärmeübergang zwischen dem zumindest einen Mittel (493) zum Erzeugen eines durch die Änderung des Magnetfelds induzierten elektrischen Stroms und dem Fluid konvektiv ist.

8. Fluiderwärmungsvorrichtung nach einem der vorangegangenen Ansprüche, die eine periphere Struktur (490) umfasst, welche eine Vielzahl an Kanälen (492) aufweist, welche sich entlang der Längsachse der Vorrichtung erstrecken, wobei jeder Kanal (492) zumindest ein Mittel (493) zum Erzeugen eines durch eine Änderung des Magnetfelds induzierten elektrischen Stroms umfasst, wobei der elektrische Strom durch den Joule-Effekt Wärme erzeugt, welche auf das Fluid übertragen wird.

9. Fluiderwärmungsvorrichtung nach dem vorangegangen Anspruch, wobei jeder Kanal eine Vielzahl an eine Vielzahl an Mitteln (493) zum Erzeugen eines durch eine Änderung des Magnetfelds induzierten elektrischen Stroms umfasst, wobei diese Mittel Sekundärspulen sind, welche entlang der Achse der Vorrichtung nachfolgen.

10. Fluiderwärmungsvorrichtung nach dem vorangegangenen Anspruch, wobei Sekundärspulen (493) eine Mittelachse parallel zu der Achse der Vorrichtung aufweisen und, entlang des Kanals, auf dem Level einer Mittelebene zwischen den aufeinanderfolgenden Ebenen angeordnet sind, welche von zwei aufeinanderfolgenden Stufen (441, 442) von Turbinenschaufeln gebildet werden.

11. Fluiderwärmungsvorrichtung nach Anspruch 8 oder 9, wobei Sekundärspulen (493) eine Mittelachse senkrecht zu der Achse der Vorrichtung aufweisen und, entlang des Kanals, auf dem Level einer Ebene angeordnet sind, welche durch eine Stufe (441, 442) von Turbinenschaufeln gebildet wird.

12. Fluiderwärmungsvorrchtung nach dem vorangegangenen Anspruch, wobei die Sekundärspulen auf Innenfläche des Kanals platziert sind.

13. Fluiderwärmungsvorrichtung nach Anspruch 7, wobei das zumindest eine Mittel zum Erzeugen eines durch die Änderung des Magnetfelds induzierten elektrischen Stroms zum Erzeugen von Wärme durch den Joule-Effekt, welche auf das Fluid übertragen wird, eine Elektrizität leitende Beschichtung ist, welche an der Innenfläche des Kanals (492) angeordnet ist.

14. Fluiderwärmungsvorrichtung nach einem der vorangegangenen Ansprüche, wobei das Tragmittel (431) eine zentrale hohle Leitung ist, welche sich entlang der Längsachse der Vorrichtung erstreckt.

15. Motor (1), insbesondere für eine Rakete, welcher eine Heizkammer (41) für zumindest ein Treib-Fluid und eine Gasaustrittsdüse (45) umfasst, welche von der Heizkammer (41) stromabwärts angeordnet ist, **dadurch gekennzeichnet, dass** die Heizkammer einen nuklearen Kern (42) und, stromabwärts des nuklearen Kerns (42), eine Fluiderwärmungsvorrichtung (43) nach einem der vorangegangenen Ansprüche zum Erhöhen der Temperatur des an dem Auslass des nuklearen Kerns (42) erhaltenen Fluid umfasst.

16. Motor nach dem vorangegangenen Anspruch, welcher einen Wärmetauscher (30)zum Erwärmen des Treib-Fluids, bevor dieses in den nuklearen Kern (42) eintritt, umfasst.

17. Motor nach einem der Ansprüche 15 oder 16, welcher einen geschlossenen Kreislauf (50) umfasst, worin ein Arbeitsfluid, wie zum Beispiel Helium, strömt, wobei der geschlossene Kreislauf (50) umfasst:

    - zumindest einen Kompressor (60), um das Arbeitsmedium mit Druck zu beaufschlagen;
    - die Fluiderwärmungsvorrichtung (43) der Ansprüche 1 bis 14 zum Expandieren des Arbeitsfluids mittels der Stufen (441, 442) von Turbinenschaufeln;
    - zumindest eine Turbine (61) , welche mit dem antreibenden Kompressor (60) mittels einer Welle (62) verbunden ist, zum weiteren Expanieren des Arbeitsfluids; und
    - zumindest einen Wärmetauscher (30) zum Herunterkühlen des Arbeitsfluids.

**Revendications**

1. Dispositif de chauffage de fluide (43) doté d'un axe longitudinal, **caractérisé par le fait qu'**il comprend

    - au moins deux étages (441, 442) d'aubes de turbine montés sur un moyen de support (431, 431'), lesdits étages d'aubes de turbine étant à la fois en mesure de tourner librement autour de l'axe longitudinal du dispositif et disposés de façon à tourner dans des sens de rotation opposés ;
    - à chaque étage (441, 442) des aubes de turbine, une pluralité de moyens (461, 462, 470) pour la production d'un champ magnétique, incorporés dans l'étage correspondant d'aubes de turbine, deux moyens consécutifs (461) pour la production dudit champ magnétique au même étage d'aubes de turbine (441) ayant des pôles opposés ;

    la rotation des étages (441, 442) des aubes de turbine permettant la production d'un champ magnétique variable qui, avec le temps, passe d'une direction ascendante à une direction descendante, et inversement, les directions ascendante et descendante étant toutes les deux parallèles à l'axe longitudinal du dispositif ; et

- au moins un moyen (493) pour la production d'un courant électrique induit par la variation de ce champ magnétique, ledit courant électrique produisant de la chaleur par le biais d'un effet Joule, qui est transférée au fluide.

2. Dispositif de chauffage de fluide selon une quelconque des revendications précédentes, dans lequel, à chaque étage (441,442) des aubes de turbine, chaque moyen (461, 462) pour la production d'un champ magnétique est disposé à la périphérie dudit étage (443).

3. Dispositif de chauffage de fluide selon la revendication précédente, dans lequel, chaque moyen (461, 462) pour la production d'un champ magnétique est disposé entre deux aubes consécutives du même étage des aubes de turbine.

4. Dispositif de chauffage de fluide selon la revendication précédente, dans lequel, pour chaque étage (441, 442) des aubes de turbine, ladite pluralité de moyens (461, 462) pour la production d'un champ magnétique est composée de bobines primaires associées à un moyen (470) de production d'un courant continu.

5. Dispositif de chauffage de fluide selon la revendication précédente, dans lequel le sens de l'enroulement et l'alimentation de courant de deux bobines primaires consécutives (461) autour de la périphérie d'un étage (441) des aubes de turbine forment des pôles opposés.

6. Dispositif de chauffage de fluide selon la revendication 4 ou 5, dans lequel lesdites bobines primaires (461, 462) possèdent un axe central à disposition radiale par rapport à l'étage (441, 442) des aubes de turbine dont il fait partie intégrante.

7. Dispositif de chauffage de fluide selon une des revendications précédentes, dans lequel le transfert de chaleur entre au moins un moyen (493) pour la production d'un courant électrique induit par la variation du champ magnétique et du fluide est convectif.

8. Dispositif de chauffage de fluide selon une des revendications précédentes, comprenant une structure périphérique (490) possédant une pluralité de canaux (492) s'étendant le long de l'axe longitudinal du dispositif, chaque canal (492) comprenant au moins un moyen (493) pour la production d'un courant électrique induit par une variation du champ magnétique, ledit courant électrique produisant de la chaleur par effet Joule, qui est transférée au fluide.

9. Dispositif de chauffage de fluide selon la revendication précédente, dans lequel chaque canal comprend une pluralité de moyens (493) pour la production d'un courant électrique induit par une variation du champ magnétique, ledit moyen étant composé de bobines secondaires qui se succèdent le long de l'axe du dispositif.

10. Dispositif de chauffage de fluide selon la revendication précédente, dans lequel les bobines secondaires (493) possèdent un axe central parallèle à l'axe du dispositif et sont disposées, le long du canal, au niveau d'un plan médian, entre les plans consécutifs formés par deux étages consécutifs (441, 442) des aubes de turbine.

11. Dispositif de chauffage de fluide selon la revendication 8 ou 9, dans lequel les bobines secondaires (493) possèdent un axe central perpendiculaire à l'axe du dispositif et sont disposées, le long du canal, au niveau d'un plan formé par un étage (441, 442) des aubes de turbine.

12. Dispositif de chauffage de fluide selon la revendication précédente, dans lequel lesdites bobines secondaires sont placées sur la surface interne du canal.

13. Dispositif de chauffage de fluide selon la revendication 7, dans lequel ledit au moins un moyen, pour la production d'un courant électrique induit par la variation du champ magnétique de façon à produire de la chaleur par effet Joule, qui est transférée au fluide, est un revêtement conducteur d'électricité, disposé sur la surface interne du canal (492).

14. Dispositif de chauffage de fluide selon une des revendications précédentes, dans lequel ledit moyen de support (431) est un conduit creux central, qui s'étend le long de l'axe longitudinal du dispositif.

15. Moteur (1), notamment pour une fusée, composé d'une chambre de chauffage (41) pour, au moins un fluide propulseur et une tuyère d'éjection de gaz (45) placée en aval de la chambre de chauffage (41), **caractérisé par le fait que** la chambre de chauffage (41) comprend un coeur nucléaire (42), et, en aval dudit coeur nucléaire (42), un dispositif de chauffage de fluide (43) selon l'une des revendications précédentes, pour augmenter la température du fluide prélevé à la sortie du coeur nucléaire (42).

16. Moteur selon la revendication précédente, comprenant un échangeur de chaleur (30) pour chauffer le fluide propulseur avant l'introduction de ce dernier dans le coeur nucléaire (42).

17. Moteur selon la revendication 15 ou 16, comprenant un circuit fermé (50) dans lequel s'écoule un fluide de travail, tel que de l'hélium, ledit circuit fermé (50) comprenant :

- au moins un compresseur (60) pour la mise sous pression du fluide de travail ;
- le dispositif de chauffage de fluide (43) selon les revendications 1 à 14 pour l'expansion dudit fluide de travail à l'aide des étages (441, 442) des aubes de turbine ;
- au moins une turbine (61) connectée au compresseur d'entraînement (60) à l'aide d'un arbre (62) pour accroître l'expansion du fluide de travail ;
- au moins un échangeur de chaleur (30) pour le refroidissement du fluide de travail.

*Fig. 1*

*Fig. 2*

EP 2 398 296 B1

Fig. 3

upward

downward

43

Fig. 4

15

Fig. 5

Fig. 6

Fig. 7

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6971228 B

- FR 2788812

**Non-patent literature cited in the description**

- **MARC N. WILSON ; DR. ALAN WILHITE ; D.R. KOMAR.** Bimodal Nuclear Thermal Rocket Propulsion Systems for Human Exploration of Mars. AIAA, 02 August 2009